Europäisches Patentamt

European Patent Office

Office européen des brevets

(11) Publication number: **0 324 565**
**A1**

## (12) EUROPEAN PATENT APPLICATION

(21) Application number: **89300148.7**

(22) Date of filing: **09.01.89**

(51) Int. Cl.⁴: **A 01 K 13/00**

(30) Priority: **09.01.88 IE 1838/87**

(43) Date of publication of application:
**19.07.89 Bulletin 89/29**

(84) Designated Contracting States:
**AT BE CH DE ES FR GB GR IT LI LU NL SE**

(71) Applicant: **Connaughton, Noel**
**Tubberavaddy**
**Athleague County Roscommon (IE)**

**Connaughton, Stephen**
**Bellanacarrow**
**Athleague County Roscommon (IE)**

(72) Inventor: **Connaughton, Noel**
**Tubberavaddy**
**Athleague County Roscommon (IE)**

**Connaughton, Stephen**
**Bellanacarrow**
**Athleague County Roscommon (IE)**

(74) Representative: **Burford, Anthony Frederick et al**
**W.H. Beck, Greener & Co. 7 Stone Buildings Lincoln's Inn**
**London WC2A 3SZ (GB)**

(54) **Animal dip apparatus.**

(57) The invention provides apparatus for use in dipping animals, especially sheep, in a liquid solution of insecticide. The animals enter a dry bath (4) through entrance (5) which is then closed. Liquid solution is then pumped into the bath (4) to immerse the animals and pumped out again. Exit (6) is then opened to allow the animals to leave. In this way there is avoided the injury or loss usually associated with putting unwilling animals into a bath already full of liquid solution. A high throughput can be achieved by operating two or more baths in parallel, pumping the liquid solution alternately from one to the other, so that animals are dipped in one while entering or leaving the other.

EP 0 324 565 A1

Description

# ANIMAL DIP APPARATUS

The present invention relates to apparatus for use in dipping animals, for example sheep, in a liquid solution of insecticide, comprising a bath for containing the liquid solution and access means for enabling the animals to enter and leave the bath.

Many different types of apparatus are known for this purpose. They all suffer from the common disadvantage that animals do not like to enter a bath full of liquid solution and they frequently resist entering. When animals are forcibly encouraged to enter they may become injured, or in exceptional cases, the animals may die. This is particularly true of pregnant animals. Furthermore, forcibly encouraging animals to enter a bath is time consuming and labour intensive and thus expensive.

The present invention provides apparatus of the type described in which the access means comprises one or more gates or doors in the wall of the bath, which may be opened to allow entry or exit of the animals and may be closed to seal the bath, and in which the apparatus includes a liquid store for the liquid solution and means operable to fill the bath with liquid solution from the liquid store or to empty the liquid solution from the bath into the liquid store.

With the apparatus according to the invention, it is no longer necessary for sheep to enter a bath already full of liquid. Instead, the gate may be opened to allow the animals to enter the bath. while the bath is empty of liquid, the gate may then be closed, the bath may be filled with liquid solution from the liquid store so as to dip the animals, the bath may then be emptied of liquid solution, and the gate may then be opened to allow the animals to leave. As a result, there is much less likelihood of injury or loss of animals.

Advantageously, the apparatus includes two or more baths and means for moving liquid solution from one bath to another. As a result, a high throughput of animals may be achieved. Each bath can serve alternately either as a bath or as a liquid store for another bath. Thus, while animals are being dipped in a first bath, which is full of liquid solution, animals may be entering a second bath which is empty of liquid solution. When dipping is completed in the first bath, the liquid solution may then be moved to the second bath, and so on.

Advantageously, the or each bath is dimensioned to receive and accommodate animals in single file only. Advantageously also the or each bath is provided with overhead means to prevent animals climbing up on other animals. Both these features assist in minimizing movement of the animals in the bath and thus in minimizing injury to or loss of animals.

The apparatus may include a drainage area to which the animals may be guided after dipping so that excess liquid may drain off the animals, be collected, and be returned to the bath or the liquid store. The apparatus may be mounted on a vehicle or trailer and may include one or more ramps to allow animals to be guided up onto the vehicle or trailer and back down again. The or each bath may comprise a support frame and a flexible liquid - impermeable membrane, and be thus collapsible for transportation purposes. The or each bath may be provided with a false floor which is perforated so that when the liquid solution is removed from the bath any residual liquid solution drains down through the perforations, whereby the animals enter an apparently completely dry bath. The means for moving the liquid solution may include a liquid delivery system such that while the or each bath is being filled liquid solution is sprayed onto the animals from above and/or from the sides.

In an alternative preferred construction, the apparatus may comprise a single bath of annular shape provided with a single gate which simultaneously allows exit in single file of animals which have already been dipped and entry in single file of animals which are to be dipped.

In a still further alternative construction, two baths are provided and the means for moving the liquid from one bath to another comprises a see-saw linkage for alternately raising one bath to a level above the other so that liquid solution flows alternately from one bath to the other bath.

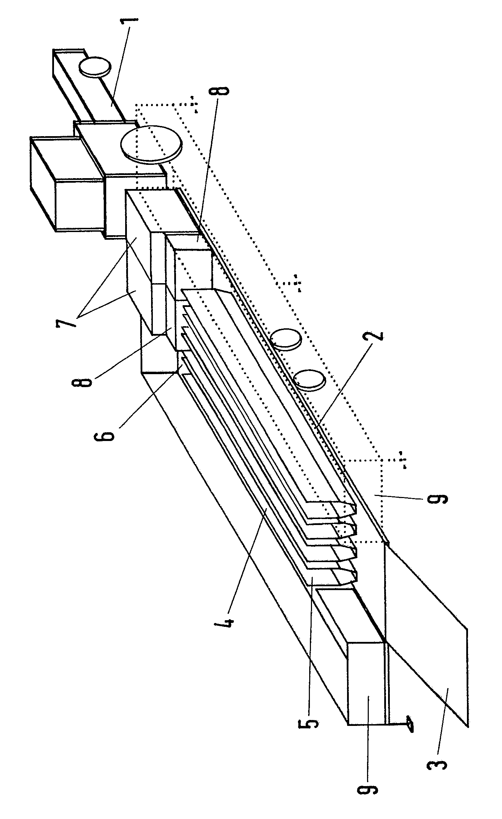

The invention will now be described more particularly with reference to the accompanying drawing which shows, by way of example only, a perspective view of one construction of apparatus according to the invention, for use in dipping sheep.

The apparatus comprises a tractor 1, a low loader trailer 2, a ramp 3 by means of which sheep may mount the trailer 2, four parallel baths 4 on the trailer 2 each capable of accommodating a number of sheep in single file and each having an entrance 5 at the rear of the trailer 2 and an exit 6 towards the front of the trailer 2, liquid solution storage tanks 7 at the front of the trailer 2, sheep pens 8 immediately behind the liquid storage tanks 7 for housing decoy sheep so as to encourage sheep mounting the ramp 3 to enter the baths 4, and drainage pens 9 (one of which is shown in dotted lines) at each side of the trailer 2. The apparatus also includes a ramp (not shown) to enable the sheep to leave the drainage pens 9, a network (not shown) of piping and pumps for moving the liquid solution between the baths 4 and the liquid storage tanks 7, and gates at the entrance 5 and the exit 6 of each bath 4.

The operation of a single bath 4 will now be described. In operation sheep are guided up the ramp 3 and into the bath 4 which has both entrance 5 and exit 6 open and is empty of liquid solution. The sheep are encouraged to enter the bath 4 by the sight of a decoy sheep in the sheep pen 8 at the far end of the bath 4. The sheep are not deterred as in conventional baths, because in accordance with the invention the bath 4 is empty when they are entering. Furthermore, to ensure complete absence of liquid solution, the bath 4 is provided with a false floor (not shown) which is perforated to allow any remaining liquid to drain out below the false floor. The sheep enter the bath 4 in single file, the bath 4 being just wide enough to accommodate the sheep. When the leading sheep has progressed some distance along the bath 4, the gate at the exit 6 is then closed to prevent the leading sheep exiting at the front end of the bath 4. The leading sheep continues moving along the bath 4 under pressure from the sheep coming behind, until the leading sheep reaches the closed gate at the exit 6 and can progress no further.

The gate at the entrance 5 is then closed behind the last sheep. An overhead grille (not shown) is closed down over the top of the bath to prevent any sheep mounting the sheep in front. The bath 4 is then filled with liquid. At least some of the liquid is delivered from above and from the sides in the form of a spray. When the sheep have been immersed for the prescribed length of time, the liquid is pumped out of the bath 4, the gate at the exit 6 is opened and the sheep may leave.

The operation of all the baths 4 simultaneously will now be described. The purpose 'of operating all four baths 4 is to achieve a greater rate of throughput of sheep. The sequence of operations described above for a single bath 4 is carried out for all four baths 4, but out of phase with one another. Thus while sheep are being dipped in one bath 4 which is full of liquid, sheep are entering or exiting from the adjacent bath 4 which is empty of liquid. The liquid can be pumped backwards and forwards from one bath 4 to the other. A filter mechanism (not shown) is provided to prevent clogging during pumping. After being dipped for the prescribed period of time, the sheep are guided to the drainage pens 9. The sheep remain in the drainage pens 9 until the liquid solution has drained from them. The liquid solution is collected and recycled.

The apparatus shown in the drawing comprises rigid baths permanently mounted on a trailer. During transportation the ramps and drainage pens 9 may be folded back onto the trailer. Thus the apparatus is highly mobile and requires minimal assembly time. During transportation some of the liquid solution is contained in the liquid storage tanks 7 and some in the baths 4.

In a modification of the embodiment illustrated in the drawings, the baths 4 are also collapsible. Each bath 4 comprises a collapsible open frame structure supporting a liquid-impermeable flexible membrane.

Alternatively, for very large flocks of sheep, the apparatus may comprise a fixed permanent structure.

In an alternative construction, not shown in the drawings, and useful for smaller numbers of sheep, a single bath is provided which is annular in shape and has one access gateway of suitable width to allow one file of sheep to leave the annular bath through the gateway, while another file is entering and following the first file around the annulus. The liquid solution is pumped alternately to and from a liquid storage tank located in the centre of the annulus.

In a still further construction, not shown in the drawings, and which is extremely simple in construction and therefore useful in remote places where fuel, spare parts and the like are not available, two baths are provided connected by a see-saw linkage enabling one bath to be raised to a level above the other to cause flow of liquid from the higher bath to the lower bath.

## Claims

1. Apparatus for use in dipping animals, for example sheep, in a liquid solution of insecticide, comprising a bath (4) for containing the liquid solution and access means (5,6) for enabling the animals to enter and leave the bath (4), characterised in that the access means (5,6) comprises one or more gates or doors in the wall of the bath, which may be opened to allow entry or exit of the animals and may be closed to seal the bath, and further characterised in that the apparatus includes a liquid store (7) for the liquid solution, and means operable to fill the bath (4) with liquid solution from the liquid store (7) or to empty the liquid solution from the bath (4) into the liquid store (7).

2. Apparatus according to claim 1, characterised in that two or more baths (4) are provided, together with means for moving liquid from one bath to another, each bath (4) being thus capable of serving as the liquid store (7) for the adjacent bath (4).

3. Apparatus according to claim 1 or claim 2, characterised in that the or each bath (4) is dimensioned to receive and accommodate animals in single file only.

4. Apparatus according to any preceding claim, characterised in that the or each bath (4) is provided with overhead means to prevent an animal climbing up on another animal.

5. Apparatus according to any preceding claim, characterised in that a drainage area (9) is provided to which the animals may be guided after dipping so that excess liquid may drain off the animals, be collected, and be returned to the bath (4) or liquid store (7).

6. Apparatus according to any preceding claim, characterised in that the apparatus is mounted on a vehicle or trailer (2), and includes one or more ramps (3) to allow animals to be guided up onto the vehicle or trailer (2) and back down again.

7. Apparatus according to any preceding claim, characterised in that the or each bath (4) comprises a support frame and a flexible liquid-impermeable membrane, and is collapsible for transportation purposes.

8. Apparatus according to any preceding claim, characterised in that the or each bath (4) is provided with a false floor which is perforated so that when liquid is removed from the bath (4) any residual liquid drains down through the perforations, whereby the animals enter an apparently completely dry bath (4).

9. Apparatus according to any preceding claim, characterised in that the means for moving the liquid includes a liquid delivery system such that when the bath (4) is being filled liquid solution is sprayed onto the animals from above and/or from the sides.

10. Apparatus according to any one of Claims 3 to 9, characterised in that a single bath is provided which is annular in shape and which includes a single gate which simultaneously allows exit in single file of animals which have been dipped and entry in single file of animals which are to be dipped.

11. Apparatus according to any one of Claims 1 to 9, characterised in that two baths are provided and in that the means for moving the liquid from one bath to another comprises a see-saw linkage for alternately raising one bath to a level above the other so that the liquid solution moves alternately from one bath to the other bath.

12. A method of dipping animals in a liquid solution, which comprises driving the animals into an empty bath through open access means in the wall thereof; closing said access means to seal the wall; filling the bath with the liquid solution; draining the liquid from the bath into a liquid store for reuse; and opening said access means to release the animals.

13. A method as claimed in Claim 12, wherein the animals are dipped in apparatus as claimed in any one of Claims 1 to 11.

# EUROPEAN SEARCH REPORT

European Patent Office

Application Number

EP    89 30 0148

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4 ) |
|---|---|---|---|
| X | US-A-1384168 (SVENSEN)<br>* page 2, line 84 - page 2, line 87 *<br>* page 4, line 106 - page 5, line 21; figures 1-12 * | 1, 4, 5, 7, 12 | A01K13/00 |
| A | | 3, 6, 9 | |
| | --- | | |
| X | DE-C-229583 (WIEMANN)<br>* the whole document * | 1, 12 | |
| | --- | | |
| X | US-A-2611341 (PARIS)<br>* column 4, line 70 - column 5, line 16; figure 2 * | 1, 12 | |
| | --- | | |
| A | US-A-4203390 (BRAZELTON)<br>* figures 1, 2 * | 10 | |
| | ----- | | |
| | | | **TECHNICAL FIELDS SEARCHED (Int. Cl.4 )** |
| | | | A01K |

The present search report has been drawn up for all claims

| Place of search | Date of completion of the search | Examiner |
|---|---|---|
| THE HAGUE | 13 APRIL 1989 | VON ARX V.U. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)